Europäisches Patentamt

European Patent Office

Office européen des brevets

(19)

(11) Publication number : **0 519 887 A1**

(12) **EUROPEAN PATENT APPLICATION**

(21) Application number : **92830322.1**

(22) Date of filing : **18.06.92**

(51) Int. Cl.⁵ : **A01G 25/16**

(30) Priority : **19.06.91 IT BS910063**

(43) Date of publication of application :
**23.12.92 Bulletin 92/52**

(84) Designated Contracting States :
**AT BE CH DE DK ES FR GB GR IT LI LU NL PT SE**

(71) Applicant : **DI NICOLA GENNARO & FIGLI S.p.A.**
**Via Mazzini 29**
**I-66020 Sambuceto di S. Giovanni Teatino (Chieti) (IT)**

(72) Inventor : **Di Nicola, Gino**
**Via Costantino 6**
**I-66020 San Giovanni Teatino (Chieti) (IT)**
Inventor : **Di Nicola, Giulio**
**Via Laurentina 501/E**
**I-00143 Roma (IT)**

(74) Representative : **Manzoni, Alessandro**
**MANZONI & MANZONI - UFFICIO INTERNAZIONALE BREVETTI P.le Arnaldo n. 2**
**I-25121 Brescia (IT)**

(54) **Computerized water distributing system for irrigation of plants.**

(57)    The here proposed invention regards a computerized water distributing system for irrigation plants which has an independent programmable electronic exchange (20) for each user or group of users, said exchange being managed by the water delivery board through from a centralized consumption programming, management and accounting unit and being designed to control the opening/closing of each electrovalve (10).

Fig. 2

EP 0 519 887 A1

The present invention relates to irrigation plants, the water of which is supplied and charged by a water delivery board. More particularly the invention relates to a computerized distributing method in said plants for water coming from an adductor network.

The delivery and the management of the water to be irrigated by the water delivery board to various users has always been the source of problems. These problems are caused by the difficulty found in being able to manage the quantity of water and/or time and rotas for its use by each user for a correct charging of the effective consumption, for an improved management of the available volume of water and finally to avoid wastages and unnecessary costs as well as to eliminate any manual intervention on the delivery organs.

The present invention aims to solve these problems in a simple and rational way giving each user the possibility of a certain control and giving the water delivery board a centralized management and accounting system therefore resulting in practical programming and economical advantages without cables.

It is infact the aim of the present invention to supply a water distributing system for irrigation plants run from independent electronic exchanges for each user and coordinated to a centralized consumption programming, management and accounting system through a personalized access code (or key).

The here proposed distribution system is substantially in accordance with claim 1. It will however be described in further details with references being made to the attached drawings in which:

Fig. 1 is a block plan of a possible configuration of an electronic exchange for each distribution point;

Fig. 2 is a schematic view of an electrohydraulic valve for the distribution of the water having an electronic exchange as in Fig. 1; and

Fig. 3 is a section view of a distribution valve.

The system under examination has a delivery electrovalve (10) for each user of the irrigation water, said electrovalve connecting to the distribution network (11) and is fitted with an electronic exchange (20) which is programmable for its opening/closing.

The electrovalve can be of any type. It is however of the advantageous electrohydraulic type with a "Y" configuration and with a shutter which has a balanced load either electronically controlled (directly or programmably), or manually controlled for emergencies. Such a valve makes use of the hydrodynamic properties of the water in order to determine the closing/opening movements of the shutter (12) with only the minimum added force applied from the outside and always maintaining a balanced load.

The "Y" shape of the valve allows the water to follow a straight course without turbulances and with limited capacity loss.

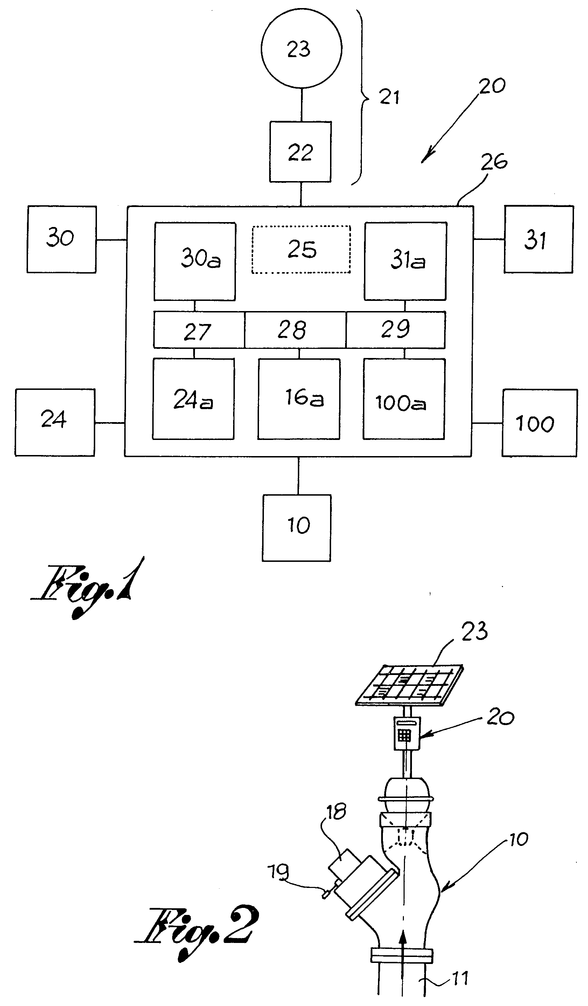

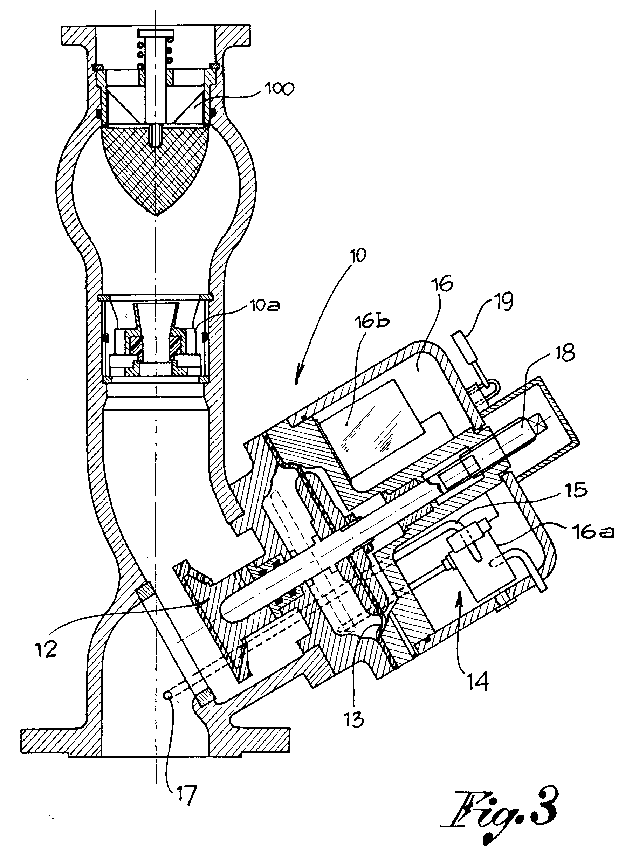

An example of this type of electrovalve is illustrated in Fig. 3 of the drawing and has:
- a membrane (14) made from high resistency and flexibility materials;
- an actuator (14) which works together with a hydropneumatic sytem for gradual, slow and balanced opening/closing movements of the shutter (12);
- a feeding line (15) for the hydrodynamic actuator (14) fused to the valve body in order to avoid the tampering of exposed tubes;
- a chamber (16) in the valve body which holds a control unit (16a) and a code card (16b) for a remote control of the valve;
- a self-cleaning filter (17) on the hydrodynamic circuit;
- a manual mechanical emergency command (18) which can be blocked by a lock (19).

The valve body can also be fitted with an end flange, or a flange and a ball joint or a flange and a bayonet joint for its assembley. The electrovalve can also be fitted with a modular type capacity restrictor (10a) and with a pressure meter (100) if requested.

In each case, the elctrovalve (10) is preset to be managed by the electronic exchange (20) to which it is joined. A particular characteristic of the exchange (20) is that it is on or extremely close to the electrovalve (10), (Fig. 2) and that it has at least one electric feeding source (21) for its autonomy of operation and to eliminate external cables or electric feeding lines as described above.

In practise, the exchange (20) will be fed by rechargable batteries (22) and/or photovoltaic panels and can be supplied with a personalized access code or electronic key (24) if requested.

Feeding through rechargable batteries (22) ensures an autonomy of operation of the exchange for a determined number of operations; feeding through photovoltaic panels and rechargable batteries notably increases the autonomy of the exchange even during the absence of the sun.

In the configuration illustrated in the plan of Fig. 1, the exchange (20) is infact fitted with at least one photovoltaic panel (23) and one rechargable battery (22) joined to the feeder circuit (25) of an electronic card (26). This includes a process unit in the form of a microprocessor (27), a data and programme memory (28) and a signal entry/exit lock (29). The microprocessor is joined to a control key board (30), a message and information video display unit (31) and to the control unit (16) of the electrovalve (10) through respective corresponding interfaces (30a, 31a, 16a).

If and when the exchange (10) is also fitted with an access key (24), the microprocessor (27) is also joined to an interface (24a) for the reading of the key. Finally, the microprocessor will also be joined to an interface (100a) if the electrovalve has a pressure meter (100) for its reading.

The exchange (10) can be programmed through a control key board (30). The programming presets the day and time of the opening and closing of the electrovalve (10), therefore with the possibility of controlling water consumption.

The programming can be verified on the display unit (31) which is recorded from the data and programme memory (29) and modified if necessary.

The programming of the exchange can be carried out even through the electronic access key (24) where available. Such a key is supplied by the water delivery board in relation to the availability of water, to the hydraulic network capacity and to the managing needs. The key will be loaded at the place of origin with indicative figures on the quantity of water to be distributed and on the periods of delivery and use of the water. it will then be sufficient to insert the key into the exchange so that it can be read and for the programming of the exchange. Furthermore, the water delivery board can store data when loading the key in its own central calculator and simultaneously transfer them to the office responsable for charging the user in relation to his consumption.

It should be noted that the same exchange can be used for managing various electrovalves divided among different users; each user will then have an identity code in order to have access to the programming of this own use.

The managing of each electrovalve will also be possible with a remote control, making use of a coded signal and with a limited radius of action.

Finally, a transmission module can be preset via ether with a longer range which allows for the programming, the reading of water delivered by each electrovalve and the signalling of any faults through a data collection station or sub-exchange.

The here proposed and described system offers various advantages such as:
- the use of electrovalves which are time programmable and do not require manual opening and closing interventions;
- the adoption of an independent electronic exchange without cables fed from an on-site electric source (solar energy);
- the employment of an exchange for each electrovalve or for groups of electrovalves but with the possibility of individual programming for the delivery of water;
- the simplicity of direct programming or programming through a pre-programmed electronic key for each exchange, thus for each electrovalve;
- the correct dividing of available water for the consumption under the direction of the board which is responsible for its supplying without having wastages and eliminating the possibility of misuse;
- the guarantee of charging each user on the basis of his effective consumption.

## Claims

1) A computerized distributing system for irrigation plants, the water of which is supplied and charged by a water delivery board and in that the water is supplied to each user through at least one hydrodynamic electrovalve, characterized in that each user or group of users has an independently programmable electronic exchange which is managed by the water delivery board through a centralized programming, management and accounting unit to control the the delivery of water through the opening/closing of each electrovalve.

2) A water distributing system in accordance with claim 1, characterized in that the electronic exchange is joined either directly or extremely close to the electrovalve or group of electrovalves and is fed from an electric energy source which is together with the exchange itself.

3) A water distributing system in accordance with claim 2, characterized in that the electric feeding source is made up from rechargable batteries and/or photovoltaic panels which capture solar energy.

4) A water distributing system in accordance with claims 1 and 2, characterized in that the electronic exchange has a process unit, in the form of a microprocessor, with a data and programme memory and a signal entry/exit lock, the microprocessor being joined to at least one control key board, one video display unit and an actuator group for each electrovalve through corresponding interfaces.

5) A water distributing system is accordance with claim 4, characterized in that the exchange is programmable through the key board.

6) A water distributing system in accordance with claim 4, characterized in that the exchange is programmable with a preloaded electronic access key and is programmed on the basis of management needs (availability of water, its delivery to various users in rota and other organizational ones) by the water delivery board, the microprocesor therefore also being joined to an interface for the reading of the access key.

7) A water distributing system in accordance with one of the preceding claims, characterized in that each electrovalve can be associated to a meter, the microprocessor thus being joined to an interface for the reading of the meter.

8) A method for distributing the water in irrigation plants with a system in accordance with the preceding claims, characterized in that the water delivery board assigns a code or a preloaded and programmed electronic key for the access programming of a peripheral exchange which is preset for the opening/closing of at least one water delivery electrovalve, for controlling the water consumption through the peripheral exchange, managing it and charging the user through a centralized calculator.

*Fig.1*

*Fig.2*

*Fig.3*

**European Patent Office**

## EUROPEAN SEARCH REPORT

Application Number

EP 92 83 0322

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 236 535 (NELSON CORP.)<br>* column 6, line 1 - line 13 *<br>* column 11, line 35 - line 46 *<br>* column 13, line 48 - column 14, line 5; figure 1 *<br>--- | 1-8 | A01G25/16 |
| Y | WO-A-9 003 724 (SOLATROL)<br>* page 17, line 9 - page 22, line 26; figures 1-3 *<br>----- | 1-8 | |
| | | | **TECHNICAL FIELDS SEARCHED (Int. Cl.5)**<br><br>A01G |

The present search report has been drawn up for all claims

| Place of search | Date of completion of the search | Examiner |
|---|---|---|
| THE HAGUE | 28 SEPTEMBER 1992 | HERYGERS J.J. |

EPO FORM 1503 03.82 (P0401)